# EUROPEAN PATENT SPECIFICATION

(11) **EP 2 077 072 B1**
(45) Date of publication and mention of the grant of the patent: **02.03.2011**
(21) Application number: 08022535.2
(22) Date of filing: 30.12.2008
(51) Int. Cl.: A01K 35/00

(54) **Accessory for applying a chip to a pigeon ring**
Zubehör zur Aufbringung eines Chips auf einen Taubenring
Accessoire pour appliquer une puce sur un collier de pigeon

(30) Priority: 07.01.2008 BE 200800011
(43) Date of publication of application: 08.07.2009
(73) Proprietor: REMELCO, naamloze vennootschap, 9100 Sint-Niklaas (BE)
(72) Inventor: Baetens, Ivan, 9100 Sint-Niklaas (BE)
(74) Representative: Donné, Eddy

(56) References cited:
- EP-A- 1 900 279
- WO-A-2008/018368
- BE-A- 1 015 147
- JP-A- 7 154 290

## Description

The present invention concerns an accessory for applying a chip to a pigeon ring, as is known within the context of pigeon racing or the like.

At present, one and the same technique is used worldwide for registering homing pigeons, whereby a pigeon ring is slid over every pigeon's leg only a few days after its birth, whereby certain data are provided in this pigeon ring, such as an identification number and a date.

Said pigeon ring is applied when the pigeons are between five and eight days old, since any earlier application of the pigeon ring entails a risk in that it might get lost, whereas after said period, the pigeon ring can no longer be slid over the pigeon's leg.

The electronic registration principle has been in use in pigeon racing for quite a while now; whereby the pigeon is automatically registered upon arrival after a race.

To this end, the pigeon is provided with a chip or what is called a "transponder" which can be detected by means of a scanner in the shape of an antenna, placed at the entrance of the pigeon house where the pigeon passes upon arrival.

With the known systems, the above-mentioned chip is built-in in a second plastic ring, fixed to the other leg than the one with the above-mentioned pigeon ring.

In order to not unnecessarily hinder the pigeon, people have been looking for a possibility to provide the chip on the same leg as the one with the pigeon ring for a considerable time now.

In order to provide a solution, systems have been developed whereby the pigeon ring is made such that it is possible to apply a chip in said pigeon ring as soon as the pigeon is qualified for racing.

A disadvantage of these known systems is that the pigeon rings have a more complex construction and are more expensive to produce.

Another disadvantage of these known systems is that they cannot be combined with the conventional pigeon rings which do not have a feature for applying a chip.

Yet another disadvantage of the known systems is that also pigeons who turn out not to qualify for races later on have already been provided with an expensive, specially equipped pigeon ring.

From DE 297,12,599 is already known an accessory for applying a chip to a pigeon ring, whereby said accessory is provided with a case in which is applied a chip and with fixing means made in the shape of a flexible arm which is fixed to the above-mentioned case and which can be provided round the above-mentioned pigeon ring.

From EP 1.900 279 and JP 07-154-290 similar accessories are known accessories whereby the accessory comprises a case wherein the chip is provided and whereby fixing means in the shape of a lip are attached to said case such that the lip can be hooked on the pigeon ring.

A disadvantage of all these known accessories is that they are relatively sizeable and require much material, as a result of which the material costs, storage costs and transport costs are relatively high.

Yet another disadvantage of such known accessories is that they are rather difficult to apply round a pigeon ring, since the arm of said accessory must first be entirely bent round the ring, after which the free end of this arm must be fixed to the case, such that force must be simultaneously exerted to keep the arm bent round the ring and to subsequently fix the arm to the case.

The present invention aims to remedy one or several of the above-mentioned and other disadvantages.

To this end, the present invention concerns an accessory for applying a chip to a pigeon ring, whereby said accessory is provided with a case in which can be provided a chip, and with fixing means which are fixed to the above-mentioned case and which can be fixed to the pigeon ring, whereby the above-mentioned fixing means comprise at least two opposite lips which are directed towards one another with their respective free ends and which are fixed to said case, whereby at least one lip can be hooked at least partly on the above-mentioned pigeon ring and whereby at least one of the lips can slide in relation to the above-mentioned case.

By "hooking on the pigeon ring" is meant here that the fixing means can be slid along a side edge of the pigeon ring, over said pigeon ring, such that the above-mentioned lip extends at least partly in the space surrounded by the above-mentioned ring.

In the case of a pigeon ring that has already been provided round the leg of a pigeon, the lip concerned will consequently extend at least partly in the space between the inner wall of the ring and the leg of the pigeon.

An advantage of such an accessory according to the invention is that it is very compact and thus can be made with little material, as a result of which it is relatively cheap as far as material costs, storage costs and transportation costs are concerned.

Another advantage of such an accessory according to the invention is that it must not be provided round the entire addendum circle of the pigeon ring, which considerably simplifies its application compared to other known accessories, for example as described in DE 297,12,599.

An additional advantage of an accessory according to the invention is that, as it must not be provided round the addendum circle of the pigeon ring, it does not make the pigeon ring illegible. Moreover, it can be very easily fixed to a pigeon ring.

Another advantage of such an accessory according to the invention is that it makes it possible to apply a chip to generally known, standard pigeon rings, without these pigeon rings having to be manufactured in a different way.

Another additional advantage of an accessory according to the invention is that this accessory must only be fixed to the pigeon ring as soon as a pigeon has actually qualified for racing, such that the unnecessary use of expensive and complex pigeon rings with special features for applying a chip can be avoided.

In order to better explain the characteristics of the present invention, the following preferred embodiments of an accessory according to the invention for applying a chip to a pigeon ring within the context of pigeon racing or the like, are described by way of example only without being limitative in any way, with reference to the accompanying drawings, in which:
figure 1 schematically represents an accessory according to the invention, seen in perspective;
figures 2 and 3 schematically represent the parts indicated by arrow F2 and F3 respectively in figure 1, seen in perspective;
figure 4 represents a variant of an accessory according to figure 1.

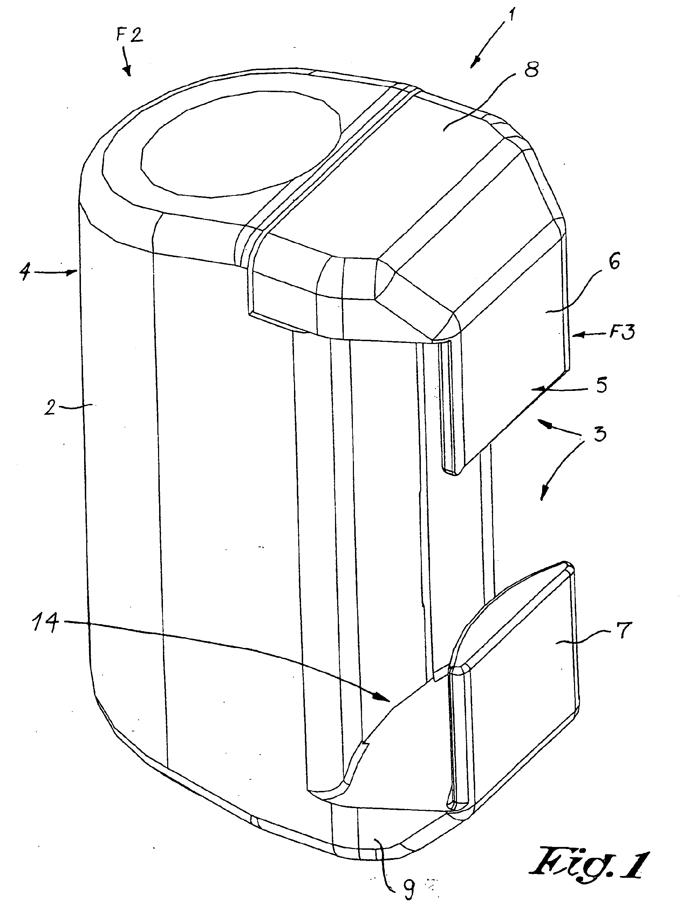

Figure 1 represents an accessory 1 according to the invention, whereby this accessory 1 is provided with a case 2 and with fixing means 3 which are fixed to the above-mentioned case or which can be fixed thereto.

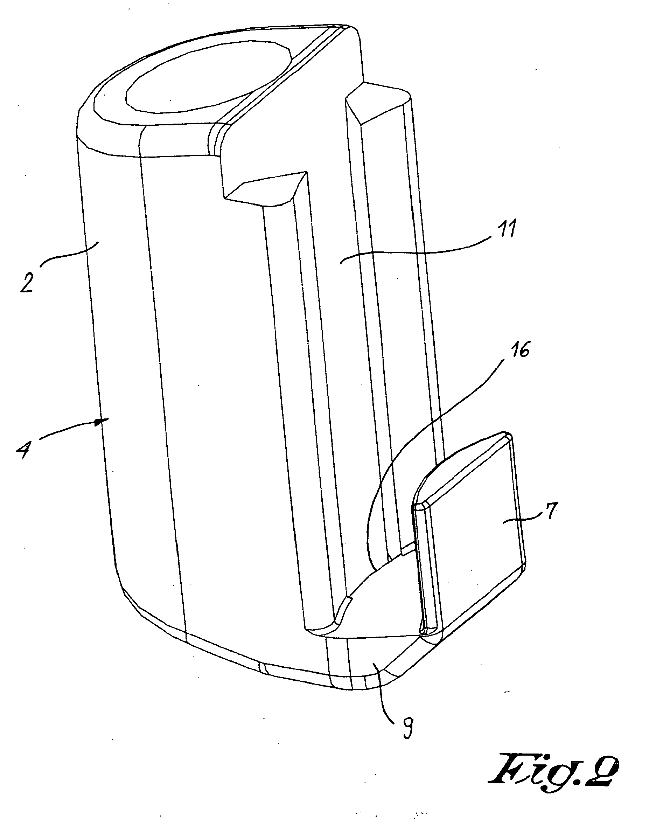

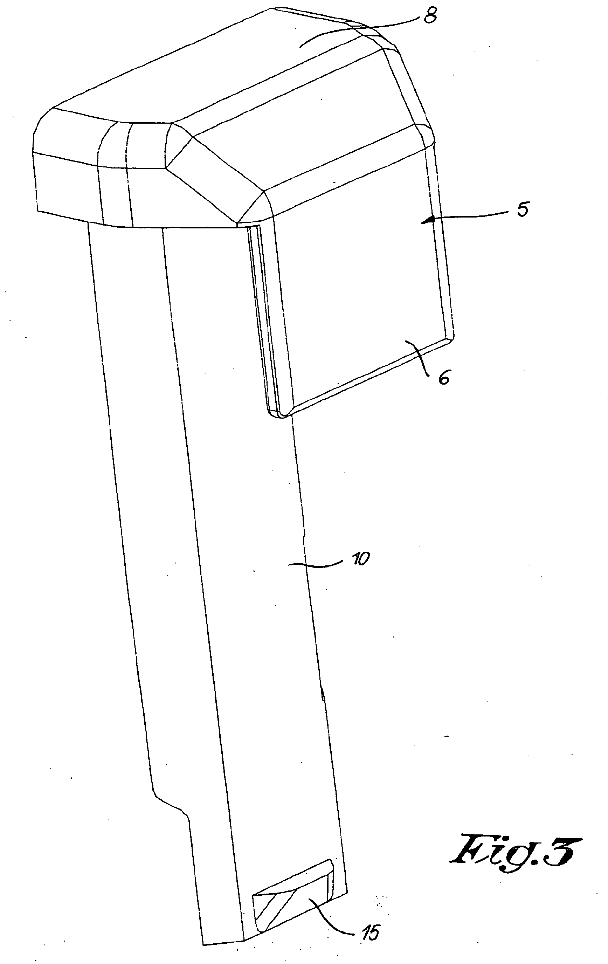

In this case, the accessory 1 is made as a plastic element in two parts formed of a base part 4 on the one hand as represented in figure 2 and comprising the above-mentioned case 2, and of a fixing element 5 on the other hand as represented in figure 3 which can slide in relation to said base part 4.

The above-mentioned fixing means 3 according to the invention comprise at least two opposite lips 6 and 7 which are directed towards one another with their respective free ends and at least one of these lips can be hooked at least partly on a pigeon ring.

When mounted, the accessory 1 is connected to the case 2 in each of the above-mentioned lips 6 and 7 by means of a cross connecting piece 8, 9 respectively, and it is fixed to said case 2 near the respective upper and lower side of the accessory 1.

According to the invention, at least one of the above-mentioned lips 6 and 7, and in this case the lip 6 which is situated near the top side of the accessory 1 as soon as the latter has been mounted, can slide in relation to the above-mentioned case 2.

To this end, said lip 6 is in this case connected to a sliding body 10, via the connecting piece 8, which in the given example is made in one piece with the above-mentioned lip 6 and which is also part of the above-mentioned fixing element 5.

In order to mount the accessory 1, the sliding body 10 of the fixing element 5 is slid in a guide 11 provided to that end, such that a construction is obtained as represented in figure 1.

The other lip 7 is in this case directly connected to the case 2 and forms a whole with the case 2, together with the connecting piece 9, in the present example.

When the accessory is mounted, the respective lips 8 and 9 are preferably situated in one another's prolongation, and the respective free ends 12, 13 respectively are situated at a distance from one another, which distance is smaller than the height of the pigeon ring to which the accessory 1 is to be fixed.

According to a preferred characteristic of the invention, the above-mentioned accessory 1 is further provided with anchor means 14 to anchor the sliding lip 6 in at least one position 5 in relation to the case 2, which anchor means 14 can preferably but not necessarily be adjusted in several positions, such that the above-mentioned sliding lip 6 can be anchored in at least two different positions in relation to the case 2.

In this example, the above-mentioned anchor means 14 are made as a hook-shaped element 15 which is provided near the free end of the above-mentioned sliding body 10 and which, when said sliding body 10 is slid entirely in the guide 11, snaps in an edge 16 provided at the bottom of the guide 11.

As represented in figure 2, the above-mentioned guide 11 is in this case conical, such that the sliding body 10 is prevented from being drawn crosswise from said guide 11.

Finally, the accessory 1 according to the invention is further provided with means to restrict the axial play of the accessory 1 in relation to a pigeon ring, whereby these means are in this case formed of the above-mentioned cross connections 8 and 9.

The use of an accessory 1 according to the invention is very simple and as follows.

The above-mentioned accessory 1 is hooked with the above-mentioned at least one lip 6, and in this case with both lips 6 and 7, at least partly, on a pigeon ring which has already been provided on the leg of the pigeon.

To this end, the lower fixed lip 7 is hooked on the pigeon ring, which implies that said lip 7 can be slid in the space between the inner wall of the pigeon ring and the leg of the pigeon.

Next, the fixing element 5 is slid in the guide 11 of the base part 4 with its sliding body 10, up to the point where the above-mentioned anchor means 14 are activated as the hook-shaped element 15 snaps in the edge 16.

The lip 6 is hereby also hooked on the pigeon ring.

Finally, a chip is provided in the above-mentioned case 2 which is preferably but not necessarily locked in said case 2, for example by means of glue or the like.

However, it is also possible for the above-mentioned chip to be provided in the case during the manufacturing of the accessory 1 and to be entirely worked into the latter. Naturally, before the lip 7 is hooked on the pigeon ring, the sliding body 10 may already have been partly slid in the guide 11 to be subsequently slid further in the guide 11, after the lip 4 has been hooked on the pigeon ring 4, up to the point where the anchor means 14 are activated.

As already mentioned above, according to a special characteristic of the invention, the above-mentioned anchor means 14 may be adjustable in several positions, such that the above-mentioned sliding lip 6 can be anchored in at least two different positions in relation to the case 2.

This makes it possible to apply the accessory 1 according to the invention to pigeon rings of different dimensions, or to slide the base part 4 and the fixing element 5 into one another beforehand until a first anchoring position is reached, and to subsequently position the accessory 1 round the pigeon ring to then slide the fixing element 5 further in the base part 4 until a second anchoring positioned is reached.

It should be noted that the outer surfaces of the connection between the lips 6 and 7 on the one hand, and the respective cross connections 8 and 9 on the other hand, are preferably rounded in order to avoid injuries to the pigeon's leg.

The major advantages of an accessory 1 according to the invention is that it can be made cheap and compact and that the pigeon ring always remains entirely legible.

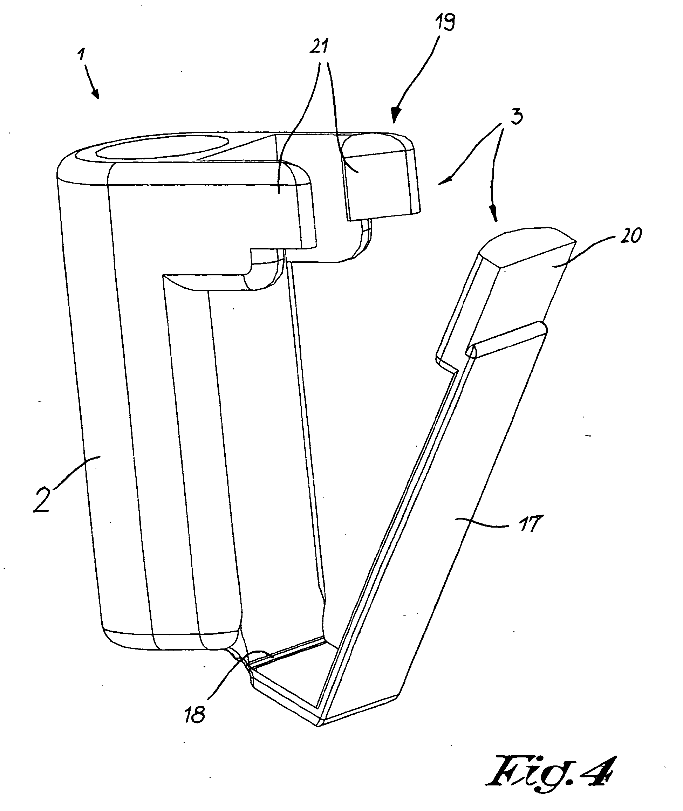

Figure 4 represents a variant of an accessory 1 according to the invention, whereby said accessory 1 is in this case provided with only one lip 17 whose length is almost equal to the height of the above-mentioned case 2 and the height of the pigeon ring to which the accessory 1 is to be fixed.

The above-mentioned lip 17 is in this case connected to the above-mentioned case 2 by means of a hinge 18, made as a film hinge in the given example, but which can also be realised in other ways.

Further, the accessory 1 in this case comprises a lock 19 to fix the free end 20 of the above-mentioned lip 17 to the above-mentioned case 2, which lock 19 comprises at least one, and in this case two hook-shaped elements 21.

The above-mentioned hook-shaped elements 21 are provided on the above-mentioned case 2 and they can co-operate with the free end 20 of the above-mentioned lip 17 as they mesh behind the lip 17 concerned on either side as the accessory 1 is closed.

According to a preferred characteristic, it is impossible to detach the above-mentioned lock 19 in order to avoid any possible fraud by swapping the accessories 1.

The use of an accessory 1 according to figure 4 is analogous to that of the embodiment described above and it is represented in figure 4.

In order to fix the accessory 1 to a pigeon ring 1, the above-mentioned lip 17 is first hooked on said pigeon ring, after which the case 2 is hinged in the direction of the lip 17 until the above-mentioned lock 19 is activated as the hook-shaped elements 21 mesh behind the above-mentioned lip 17.

In this case as well, means are provided to restrict the axial play of the accessory 1 in relation to the pigeon ring, whereby these means are in this case made in the form of the hinge 18 and the above-mentioned hook-shaped elements 21.

According to a variant of the invention which is not represented in the figures, the above-mentioned lip 17 is rigidly connected to the case 2 and said lip 17 is made of a stiff, elastic material which, after deformation of the lip 17, springs back into an initial position as a result of the form tension.

In order to apply such an accessory 1 to a pigeon ring, the flexible lip 17 must be unfolded or, in other words, folded away from the above-mentioned case 2, to thus be hooked on the pigeon ring concerned.

Next, under the influence of the form tension of the rigid, elastic lip 17, said lip 17 will spring back into the initial position and thus it will stay fixed round the pigeon ring.

The present invention is by no means restricted to the embodiments given by way of example and represented in the accompanying drawings; on the contrary, such an accessory 1 according to the invention can be made in all sorts of shapes and dimensions while still remaining within the scope of the invention.

## Claims

1. Accessory for applying a chip to a pigeon ring, whereby this accessory (1) is provided with a case (2) in which can be provided a chip, and with fixing means (3) which are attached to the above-mentioned case (2) and which can be fixed to the pigeon ring, wherein the above-mentioned fixing means (3) comprise at least two opposite lips (6 and 7) which are directed towards one another with their respective free ends and which are fixed to said case (2) and wherein at least one lip can be hooked at least partly on the above-mentioned pigeon ring, **characterized in that** at least one of the lips (6) can slide in relation to the above-mentioned case (2).

2. Accessory according to claim 1, **characterised in that** the above-mentioned at least one sliding lip (6) is connected to a sliding body (10) which can slide in a guide (11) provided to that end in the case (2).

3. Accessory according to claim 1 or 2, **characterised in that** this accessory (1) is provided with anchor means (14) to anchor the sliding lip (6) in at least one position in relation to the case (2).

4. Accessory according to claim 3, **characterised in that** the above-mentioned anchor means (14) are adjustable in several positions, such that the above-mentioned sliding lip (6) can be anchored in at least two different positions in relation to the case (2).

5. Accessory according to claim 1, **characterised in that** the above-mentioned lip (17) is connected to the above-mentioned case (2) with one far end by means of a hinge (18).

6. Accessory according to claim 5, **characterised in that** the above-mentioned hinge (18) is made in the shape of a film hinge.

7. Accessory according to claim 5 or 6, **characterised in that** it comprises a lock (19) for fixing the free end of the above-mentioned lip (17) to the above-mentioned case (2).

8. Accessory according to claim 7, **characterised in that** the above-mentioned lock (19) comprises at least one hook-shaped element (21).

9. Accessory according to claim 8, **characterised in that** the above-mentioned hook-shaped element (21) is provided on the above-mentioned case (2) and can co-operate with the free end (20) of the above-mentioned lip (17).

10. Accessory according to any one of claims 7 to 9, **characterised in that** the above-mentioned lock (19) cannot be detached.

11. Accessory according to claim 1, **characterised in that** the above-mentioned lip (17) is made of a stiff, elastic material which, after the lip (17) has been deformed, springs back into an initial position as a result of the form tension.

12. Accessory according to claim 1, **characterised in that** the above-mentioned accessory (1) is made in one part.

13. Accessory according to any one of the preceding claims, **characterised in that** it is provided with means to restrict the axial play of the accessory (1) in relation to the pigeon ring.

## Patentansprüche

1. Zubehör zum Anbringen eines Chips an einem Taubenring, wobei dieses Zubehör (1) mit einer Hülse (2), worin ein Chip angebracht werden kann, und mit Befestigungsmitteln (3), die an der vorgenannten Hülse (2) befestigt sind und die an dem Taubenring befestigt werden können, versehen ist, wobei die vorgenannten Befestigungsmittel (3) mindestens zwei gegenüberliegende Lippen (6 und 7) umfassen, die mit ihren jeweiligen freien Enden zueinander gerichtet sind und die an dieser Hülse (2) befestigt sind, und wobei mindestens eine Lippe mindestens teilweise an dem vorgenannten Taubenring eingehakt werden kann, **dadurch gekennzeichnet, dass** mindestens eine der Lippen (6) in Bezug auf die vorgenannte Hülse (2) verschiebbar ist.

2. Zubehör nach Anspruch 1, **dadurch gekennzeichnet, dass** die vorgenannte mindestens eine verschiebbare Lippe (6) mit einem Schiebekörper (10) verbunden ist, der in einer zu diesem Zweck in der Hülse (2) vorgesehenen Führung (11) verschiebbar ist.

3. Zubehör nach Anspruch 1 oder 2, **dadurch gekennzeichnet, dass** dieses Zubehör (1) mit Verankerungsmitteln (14) zum Verankern der verschiebbaren Lippe (6) in mindestens einer Position in Bezug auf die Hülse (2) versehen ist.

4. Zubehör nach Anspruch 3, **dadurch gekennzeichnet, dass** die vorgenannten Verankerungsmittel (14) in mehrere Positionen verstellbar sind, sodass die vorgenannte verschiebbare Lippe (6) in mindestens zwei verschiedenen Positionen in Bezug auf die Hülse (2) verankert werden kann.

5. Zubehör nach Anspruch 1, **dadurch gekennzeichnet, dass** die vorgenannte Lippe (17) mit einem Ende mittels eines Scharniers (18) mit der vorgenannten Hülse (2) verbunden ist.

6. Zubehör nach Anspruch 5, **dadurch gekennzeichnet, dass** das vorgenannte Scharnier (18) in Form eines Filmscharniers ausgeführt ist.

7. Zubehör nach Anspruch 5 oder 6, **dadurch gekennzeichnet, dass** es eine Verriegelung (19) zum Befestigen des freien Endes der vorgenannten Lippe (17) an der vorgenannten Hülse (2) umfasst.

8. Zubehör nach Anspruch 7, **dadurch gekennzeichnet, dass** die vorgenannte Verriegelung (19) mindestens ein hakenförmiges Element (21) umfasst.

9. Zubehör nach Anspruch 8, **dadurch gekennzeichnet, dass** das vorgenannte hakenförmige Element (21) an der vorgenannten Hülse (2) angebracht ist und mit dem freien Ende (20) der vorgenannten Lippe (17) zusammenwirken kann.

10. Zubehör nach einem der Ansprüche 7 bis 9, **dadurch gekennzeichnet, dass** die vorgenannte Verriegelung (19) nicht gelöst werden kann.

11. Zubehör nach Anspruch 1, **dadurch gekennzeichnet, dass** die vorgenannte Lippe (17) aus einem steifen, elastischen Material ausgeführt ist, das, nach Verformen der Lippe (17), aufgrund der Formspannung in eine Ausgangsposition zurückfedert.

12. Zubehör nach Anspruch 1, **dadurch gekennzeichnet, dass** das vorgenannte Zubehör (1) einteilig ausgeführt ist.

13. Zubehör nach einem der vorgenannten Ansprüche, **dadurch gekennzeichnet, dass** es mit Mitteln zum Begrenzen des axialen Spiels des Zubehörs (1) in Bezug auf den Taubenring versehen ist.

## Revendications

1. Accessoire pour appliquer une puce sur une bague pour pigeon, ledit accessoire (1) étant muni d'un boîtier (2) dans lequel peut venir s'insérer une puce, et de moyens de fixation (3) qui sont fixés au boîtier (2) susmentionné et qui peuvent venir se fixer à la bague pour pigeon, dans lequel les moyens de fixation susmentionnés (3) comprennent au moins deux lèvres opposées (6 et 7) qui sont orientées l'une vers l'autre avec leurs extrémités libres respectives et qui sont fixées audit boîtier (2) et dans lequel au moins une lèvre peut venir s'accrocher au moins en partie à la bague pour pigeon susmentionnée, **caractérisé en ce que** au moins une des lèvres (6) peut coulisser par rapport au boîtier susmentionné (2).

2. Accessoire selon la revendication 1, **caractérisé en ce que** ladite au moins une lèvre coulissante (6) mentionnée ci-dessus est reliée à un corps coulissant (10) qui est à même de coulisser dans un guide (11) prévu à cet effet dans le boîtier (2).

3. Accessoire selon la revendication 1 ou 2, **caractérisé en ce que** ledit accessoire (1) est muni d'un moyen d'ancrage (14) pour ancrer la lèvre coulissante (6) dans au moins une position par rapport au boîtier (2).

4. Accessoire selon la revendication 3, **caractérisé en ce que** le moyen d'ancrage susmentionné (14) est réglable pour pouvoir prendre plusieurs positions, de telle sorte que la lèvre coulissante susmentionnée (6) peut venir s'ancrer dans au moins deux positions différents par rapport au boîtier (2).

5. Accessoire selon la revendication 1, **caractérisé en ce que** la lèvre susmentionnée (17) est reliée au boîtier susmentionné (2) avec son extrémité éloignée au moyen d'une articulation (18).

6. Accessoire selon la revendication 5, **caractérisé en ce que** l'articulation susmentionnée (18) est configurée pour prendre la forme d'une articulation pelliculaire souple.

7. Accessoire selon la revendication 5 ou 6, **caractérisé en ce qu'**il comprend un verrou (19) pour fixer l'extrémité libre de la lèvre susmentionnée (17) au boîtier susmentionné (2).

8. Accessoire selon la revendication 7, **caractérisé en ce que** le verrou susmentionné (19) comprend au moins un élément (21) en forme de crochet.

9. Accessoire selon la revendication 8, **caractérisé en ce que** l'élément (21) susmentionné en forme de crochet est prévu sur le boîtier susmentionné (2) et peut coopérer avec l'extrémité libre (20) de la lèvre susmentionnée (17).

10. Accessoire selon l'une quelconque des revendications 7 à 9, **caractérisé en ce que** le verrou susmentionné (19) ne peut être détaché.

11. Accessoire selon la revendication 1, **caractérisé en ce que** la lèvre susmentionnée (17) est constituée d'une matière élastique rigide qui, après déformation de la lèvre (17), reprend élastiquement sa position initiale suite à la tension de la forme.

12. Accessoire selon la revendication 1, **caractérisé en ce que** l'accessoire susmentionné (1) est réalisé en une seule pièce.

13. Accessoire selon l'une quelconque des revendications précédentes, **caractérisé en ce qu'**il est muni de moyens pour restreindre le jeu axial de l'accessoire (1) par rapport à la bague pour pigeon.
